# EUROPEAN PATENT SPECIFICATION

(11) **EP 2 180 103 B1**
(45) Date of publication and mention of the grant of the patent: **17.08.2011**
(21) Application number: 07803659.7
(22) Date of filing: 16.07.2007
(51) Int. Cl.: E04B 1/19, E04B 2/74

(54) **DEVICE FOR JOINING PROFILES**
VORRICHTUNG ZUR VERBINDUNG VON PROFILEN
DISPOSITIF D'ASSEMBLAGE DE PROFILS

(43) Date of publication of application: 28.04.2010
(73) Proprietor: Pareja Rendón, John Fredy, Pereira, Manizares (CO)
(72) Inventor: PEREZ CIDRE, José Manuel, Dosquebradas (CO)
(74) Representative: Capitan Garcia, Maria Nuria
(86) International application number: PCT/ES2007/070132
(87) International publication number: WO 2009/010604

(56) References cited:
- EP-A- 0 712 969
- DE-U1- 9 304 055
- US-A- 4 907 388

## Description

### FIELD OF THE INVENTION

The present invention relates to a profile joining device, mainly applicable to temporary modular structures that are frequently assembled and disassembled.

The device of the present invention consists of a and second section and an element which is capable of separating said sections, in such a way as to enable the unit formed to be inserted in a first profile, by means of which the first section is retained through expansion and the second section through the separating action of the element with separation capacity. Thus defined, the unit establishes a union with a second profile by means of the expending of the first and second section ends.

The separating capacity of the first and second sections is limited, in order to avoid producing permanent deformation damages to either the profiles to be joined or to the first and second sections.

### BACKGROUND OF THE INVENTION

The existence of profile joining devices with two sections that are inserted into one of the profiles to be joined and which, by means of the expansion of both sections, are retained in the first profile, in such a way the device is joined to the second profile through the expanding action of both, section ends, is well known.

The separation between the two sections is achieved by means of an element capable of separating said sections, which become adapted to the inner walls of the profile in which the device is contained.

This element is actuated on numerous occasions, as the profile joinging device of the present invention is mainly applicable to temporary modular structures which are frequently assembled and disassembled. This can lead to damages caused by the possible permanent deformation of both the profiles to be joined and the elements of the closing device.

Solving the aforementioned problem by limiting the separation capacity of the first and second sections of the device is known from documents EP-A-0712969, DE-U-9304055 and US-A-4907388.
Nevertheless, neither of these documents discloses a profile joining device with two sections that are inserted into one of the profiles to be joined with the features of claim 1 in which the surface of the first and/or the second sections has been partially or fully treated to increase its roughness in order to avoid the lost of position of the profiles.

### DESCRIPTION OF THE INVENTION

The present invention relates to a profile joining device, mainly applicable to temporary modular structures that are frequently assembled and disassembled.

The device of the present invention consists of
a first section;
a second section; and
an element capable of separating the first and second sections.

The aforementioned unit may be inserted in a first profile, by means of which the first section is retained through expansion and the second section throught the separating action of the element with separation capacity. The unit thus defined establishes a union with a second profile by means of the expanding action of the first and second section ands.

The separation capacity of the first and second sections is limited, in order to avoid producing permanent deformation damages to either the profiles to be joined or to the first and second sections. The device of the present invention is characterized in that the section of the first and/or the second sections has been partially or fully treated to increase its roughness in order to avoid the loss of position of the profiles.

### DESCRIPTION OF THE DRAWINGS

This specification is complemented by a set of drawings which illustrate the example of preferred embodiment of the invention in an unlimitative way
Figure 1. Shows a schematic exploded view of the constituent elements of the profile joining device of the present invention.
Figure 2. Shows a schematic view of the two profiles joined by the device of the present invention.

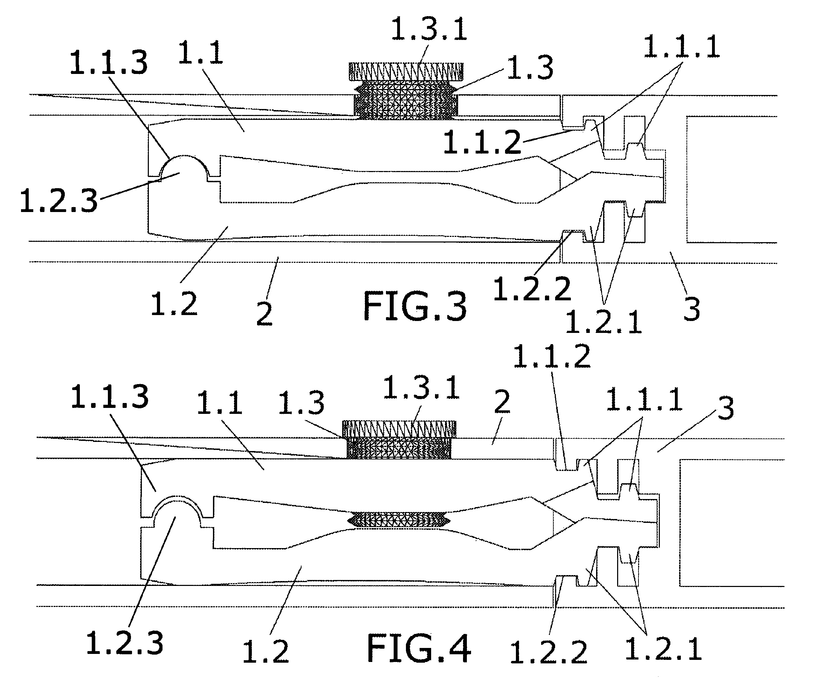

Figure 3. Shows a schematic side view of the two profiles joined by the joining device of the present invention, in use position and prior to the expansion of the two constituent sections thereof.
Figure 4. Shows a schematic view identical to that of Figure 3, in which the separating element of the two sections causes these to adjust to both profiles.

### PREFERRED EMBODIMENT OF THE INVENTION

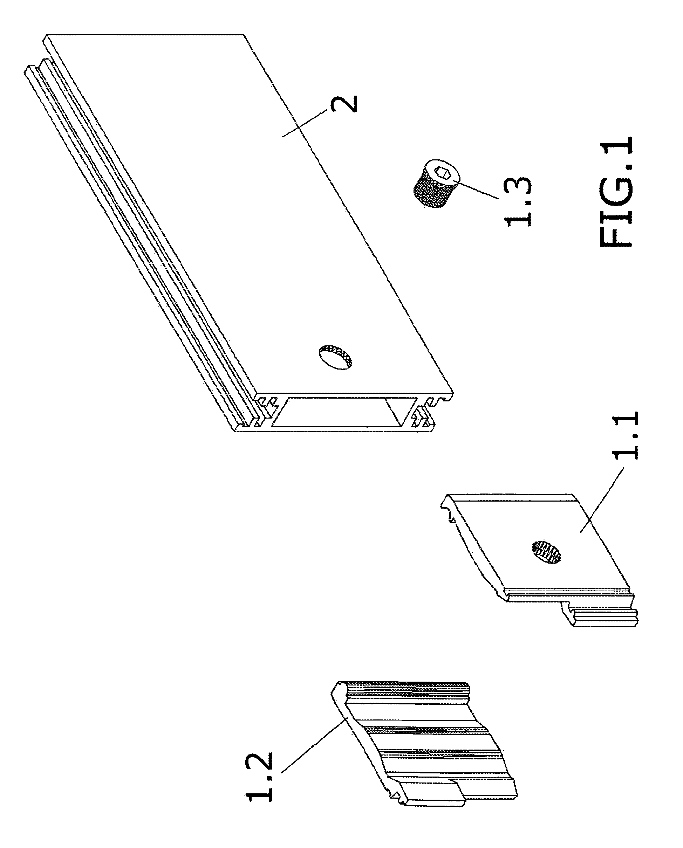

Figure 1 shows an exploded view of the constituent elements of the preferred embodiment of the device of the present invention. That is,
a first (1.1) section;
a second (1,2) section; and
an element (1, 3) capable of separating the first (1.1) and second (1.2) sections.

In the preferred embodiment, this element (1,3) consists of a screw which is threaded into the first (1.1) section, the end of which rests upon the second (1.2) section.

The aforementioned unit (1) may the Inserted into a first profile (2).

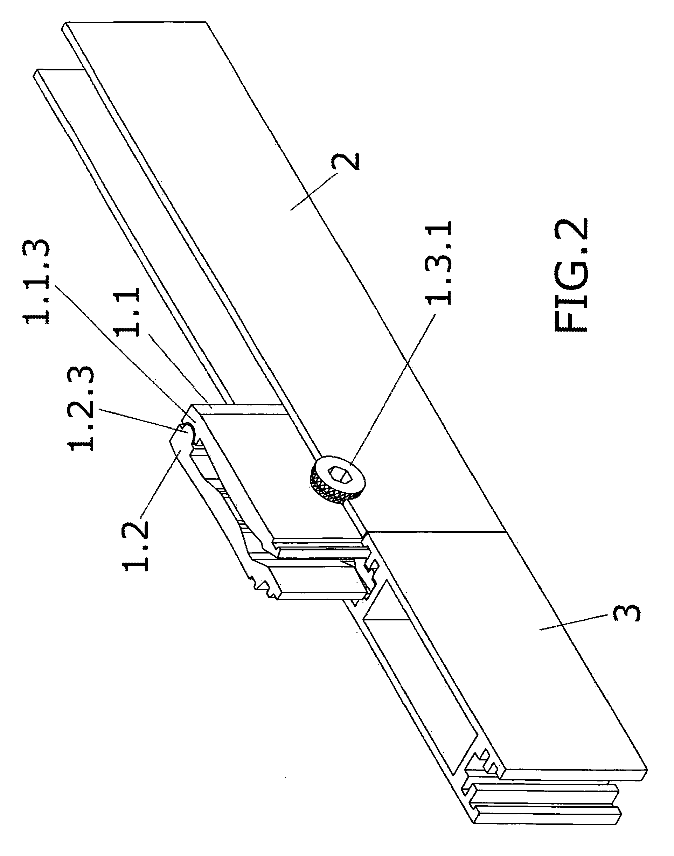

Figure 2 shows another view of the preferred embodiment of Figure 1, in which the device of the present invention is inserted into a first profile (2); thereby establishing a union with a second profile (3).

In the preferred embodiment, the limitation the capacity of the first (1.1) and second (1.2) sections is established by limiting the screw's penetration depth, which is achieved by means of a flange (1.3.1).

As the device of the present invention is mainly applicable to temporary modular structures which must be assembled and disassembled in the shortest possible time, the screw has more than one thread in order to enable faster insertion.

The present invention also includes elements that improve the friction between the two sections (1.1, 1.2), thereby ensuring a secure union between said profiles (2, 3) To this end, in the preferred embodiment, the surface of the first (1.1) section, the second (1.2) section or both (1.1, 1.2) has been partially or fully treated to increase its roughness.

In the preferred embodiment shown in the figures, the unit ends are fiffed with alternating teeth (1.1.1, 1.2.1) in the first (1.1) and second (1.2) sections for the purpose of exerting pressure against the second (3) profile, thereby establishing the union thereof The unit (1) ends also have at least one slot (1.1.2. 1.2.2) with which to anchor them to the second profile (3).

The side walls of the joining device, of the present invention may also form an acute angle with the front or rear ends, is such a way that it can also be used to join non-orthogonal profiles.

The relative movement between the first (1.1) and second (1.2) sections (1.1, 1.2) is controlled by a limiting element, in the preferred embodiment, said element consists of the presence of projections (1.2.3) in one of the sections(1, 2) and opposing cavities (1.1.3) in at least part of the other section (2.1). Although the attached drawings represent an embodiment in which the configuration of the projections and the cavities is arched, said configuration could also be rectangular.

## Claims

1. Profile joining device which forms a unit (1) consisting of at least
- a first (1.1) section;
- a second (1.2) section; and
- an element (1.3) capable of separating the first (1.1) and second (1.2) sections, in such a way that the unit may be inserted into a first profile (2), by means of which the first (1.1) section is retained through expansion and the second (1.2) section through the separating action of the element (1,3) with separation capacity; where the unit (1) establishes a union with a second (3) profile by means of the expanding action of the (1.1) and second (1.2) section ends, and where the separation capactity of the first (1.1) and second (1.2) sections is limited, in order to avoid producing permanent deformation damages to either the profiles (2, 3) to be joined or to the first and second sections (1,2),
**characterized in that**,
the surface of the first (1.1) section, the second (1.2) section or both has been partially or fully treated to increase its roughness, thereby improving the union by friction.

2. Joining device according to claim 1, **characterized in that** the element (1,3) with separation capacity is a screw which threads into the first (1,1) section, the end of which rests upon the second (1.2) section.

3. Joining device according to claims 1 and 3, **characterized in that** the limitation to the separation capacity between the first (1.1) and second (1.2) sections is established by the screw's penetration depth.

4. Joining device according to claim 4, **characterized in that** the screw's penetration depth is limited by means of a flange.

5. Joining device according to 3, **characterized in that** the screw has more than one thread in order to enable faster insertion.

6. Joining device according to claim 1, **characterized in that** the unit (1) ends are fitted with alternating teeth in the first (1.1), and second (1.2) sections, for the purpose of exerting pressure against the second (3) profile.

7. Joining device according to claim 1, **characterized in that** the unit (1) ends have at least one slot with which to anchor them to the second (3) profile.

8. Joining device according to claim 1, **characterized in that** the first (1.1) and second (1.2) sections have an oblique configuration for the union of non-orthogonal profiles.

9. Joinig device according to claim 1, **characterized in that** the movement of both the first (1.1) and second (1.2) sections is controlled by a limiting element.

10. Joining device according to claim 10, **characterized in that** said limiting element consists of the presence of projections (1.2.3) in one of the sections (1. 2) and opposing cavities (1.1.3) in at least part of the other section (2, 1).

11. Joining device according to claim 11, **characterized in that** the configuration of the projections and opposing cavities is arched or rectangular.

## Patentansprüche

1. Verbindungsvorrichtung für Profile, die eine Einheit (1) bildet, die mindestens
- einen ersten Abschnitt und
- einen zweiten Abschnitt umfasst, sowie
- ein Element (1.3), das den ersten (1.1) und den zweiten (1.2) Abschnitt derart voneinander trennt, dass sich die Einheit in ein erstes Profil (2) einfügen lässt, wodurch der erste Abschnitt (1.1) durch Ausdehnung und der zweite Abschnitt durch die trennende Wirkung des Elements (1.3) zurückgehalten wird, wobei die Einheit (1) durch die Ausdehnungswirkung der Enden des ersten (1.1) und zweiten (1.2) Abschnitts eine Verbindung mit einem zweiten Profil (3) eingeht und wobei die trennende Wirkung des ersten (1.1) und zweiten (1.2) Abschnitts begrenzt ist, um den beiden zusammenzufügenden Profilen (2, 3) oder dem ersten (1.1) bzw. dem zweiten (1.2) Abschnitt keine bleibenden Schäden durch Verformung zuzufügen,
**dadurch gekennzeichnet,**
**dass** die Oberfläche des ersten (1.1) oder des zweiten (1.2) Abschnitts oder beider Abschnitte teilweise oder gänzlich behandelt wurde(n), um die Rauigkeit zu erhöhen und damit den Zusammenhalt durch Reibung zu verbessern.

2. Verbindungsvorrichtung nach Anspruch 1, **dadurch gekennzeichnet, dass** das trennende Element (1.3) eine Schraube ist, die man in den ersten Abschnitt (1.1) eindreht und deren Ende auf dem zweiten Abschnitt (1.2) aufliegt.

3. Verbindungsvorrichtung nach den Ansprüchen 1 und 3, **dadurch gekennzeichnet, dass** die Eindrehtiefe der Schraube die trennende Wirkung des ersten Abschnitts (1.1) vom zweiten (1.2) Abschnitt begrenzt.

4. Verbindungsvorrichtung nach Anspruch 4, **dadurch gekennzeichnet, dass** die Eindrehtiefe der Schraube durch einen Flansch begrenzt ist.

5. Verbindungsvorrichtung nach Anspruch 3, **dadurch gekennzeichnet, dass** die Schraube mehr als ein Gewinde besitzt, um ein schnelleres Eindrehen zu gewährleisten.

6. Verbindungsvorrichtung nach Anspruch 1, **dadurch gekennzeichnet, dass** die Enden der Einheit (1) mit abwechselnd angebrachten Zähnen in den ersten (1.1) und zweiten (1.2) Abschnitt eingepasst sind und **dadurch** Druck auf das zweite Profil (3) ausüben.

7. Verbindungsvorrichtung nach Anspruch 1, **dadurch gekennzeichnet, dass** die Enden der Einheit (1) mindestens einen Schlitz besitzen, der zur Verankerung am zweiten Profil (3) dient.

8. Verbindungsvorrichtung nach Anspruch 1, **dadurch gekennzeichnet, dass** der erste (1.1) und der zweite (1.2) Abschnitt zur Verbindung nicht rechtwinkliger Profile schräg konfiguriert sind.

9. Verbindungsvorrichtung nach Anspruch 1, **dadurch gekennzeichnet, dass** ein begrenzendes Element die Bewegung des ersten (1.1) und zweiten (1.2) Abschnitt kontrolliert.

10. Verbindungsvorrichtung nach Anspruch 10, **dadurch gekennzeichnet, dass** das genannte begrenzende Element aus Vorsprüngen (1.2.3) besteht, die in einen der Abschnitte (1, 2) hineinragen, sowie aus denselben gegenüber liegenden Vertiefungen (1.1.3) mindestens in Teilen des jeweils anderen Abschnitts (2, 1).

11. Verbindungsvorrichtung nach Anspruch 11, **dadurch gekennzeichnet, dass** die erwähnten Vorsprünge und Vertiefungen gebogen oder rechtwinklig geformt sind.

## Revendications

1. Dispositif pour relier des profilés formant une unité (1) consistant en au moins
- Une première (1.1) section,
- Une deuxième (1.2) section,
- Un élément (1.3) apte à séparer la première (1.1) et deuxième (1.2) sections, de telle sorte que l'unité peut être insérée dans un premier profilé (2), au moyen duquel la première (1.1) section est retenue grâce à l'expansion et la deuxième (1.2) section au moyen de faction de séparation de l'élément (1,3) avec une capacité de séparation, où l'unité (1) établit une union avec un deuxième (3) profilé au moyen des extrémités de la section (1.1) et de la deuxième section (1,2), et où la capacité de séparation de la première (1,1) et deuxième (1,2) sections est limitée, afin d'éviter de produire des dommages de déformation permanente soit aux profilés (2, 3) à relier, soit à la première et deuxième (1.2) sections,
**caractérisé en ce que**,
la surface de la première (111) section, la deuxième (1.2) section ou les deux a été partiellement ou complètement traitée pour augmenter sa rugosité, en améliorant de la sorte l'union par friction.

2. Dispositif à relier selon la revendication 1, **caractérisé en ce que** l'élément (1,3) à capacité de séparation est une vis qui se visse à l'intérieur de la première (1,1) section, l'extrémité de laquelle repose sur la deuxième (1.2) section.

3. Dispositif à relier selon les revendications 1 et 3, **caractérisé en ce que** la limitation à la capacité de séparation entre la première (1.1) et la deuxième (1.2) sections est établie par la profondeur de pénétration de la vis.

4. Dispositif à relier selon la revendication 4, **caractérisé en ce que** la profondeur de pénétration de la vis est limitée au moyen d'un rebord.

5. Dispositif à relier selon la revendication 3, **caractérisé en ce que** la vis a plus d'un filet afin de permettre une insertion plus rapide.

6. Dispositif à relier selon la revendication 1, **caractérisé en ce que** les extrémités de l'unité (1) sont montées avec une alternance de dents dans la première (1,1), et la deuxième (1,2) sections, dans le but d'exercer de la pression contre le deuxième (3) profilé.

7. Dispositif à relier selon la revendication 1, **caractérisé en ce que** les extrémités de l'unité (1) ont au moins une rainure avec laquelle on les ancre au deuxième (3) profilé.

8. Dispositif à relier selon la revendication 1, **caractérisé en ce que** la première (1.1) et la deuxième (1.2) sections ont une configuration oblique pour l'union de profilés non-orthogonaux.

9. Dispositif à relier selon la revendication 1, **caractérisé en ce que** le mouvement des deux, la première (1.1) et la deuxième (1.2) sections est contrôlé par un élément de limitation.

10. Dispositif à relier selon la revendication 10, **caractérisé en ce que** ledit élément de limitation comporte la présence de saillies (1.2.3) dans une des sections (1. 2) et des cavités opposées (1.1.3) dans au moins une partie de l'autre section (2, 1).

11. Dispositif à relier selon la revendication 11, **caractérisé en ce que** la configuration des saillies et des cavités opposées est arquée ou rectangulaire.
